# EUROPÄISCHE PATENTSCHRIFT

(11) **EP 1 169 770 B1**
(45) Veröffentlichungstag und Bekanntmachung des Hinweises auf die Patenterteilung: **20.02.2008**
(21) Anmeldenummer: 00991539.8
(22) Anmeldetag: 21.12.2000
(51) Int. Cl.: H02K 11/00, H01H 85/044

(54) **Drehstromgenerator mit elektrischer Sicherung und mit einer Gleichrichteranordnung**
Rotary current generator comprising an electrical fuse and a rectifier
Alternateur à courant triphasé comportant un fusible électrique et un redresseur

(30) Priorität: 29.12.1999 DE 19963622
(43) Veröffentlichungstag der Anmeldung: 09.01.2002
(73) Patentinhaber: ROBERT BOSCH GMBH, 70442 Stuttgart (DE)
(72) Erfinder: HAUPT, Martin, Cowbridge CF7 17BR (GB); LABITZKE, Herbert, 71706 Markgroeningen (DE); CSICSER, Walter, 71701 Schwieberdingen (DE); MITTELSTAEDT, Klaus-Uwe, 71287 Weissach (DE); SCHOLZEN, Holger, 71701 Schwieberdingen (DE); HEINZ, Karl-Otto, 71686 Remseck (DE); HAUSSMANN, Holger, 72555 Metzingen (DE); STILKE, Henning, 27356 Rotenburg/Wuemme (DE); LEHNERTZ, Hermann, 70736 Fellbach (DE)
(86) Internationale Anmeldenummer: PCT/DE2000/004568
(87) Internationale Veröffentlichungsnummer: WO 2001/050577

(56) Entgegenhaltungen:
- WO-A-88/01790
- DE-A- 19 741 830
- FR-A- 2 358 742
- FR-A- 2 732 823
- US-A- 4 531 806
- US-A- 4 808 866
- US-A- 5 645 448

## Beschreibung

Die Erfindung betrifft einen Drehstromgenerator mit elektrischer Sicherung und mit einer Gleichrichteranordnung zur Versorgung eines Gleichstromnetzes, insbesondere in Kraftfahrzeugen gemäß dem Oberbegriff des Hauptanspruchs.

### Stand der Technik

In Kraftfahrzeugen werden in zunehmendem Maße elektrische Einrichtungen eingesetzt, um Komfort und Sicherheit der Kraftfahrzeuge zu verbessern. Zur Versorgung dieser Einrichtungen im Bordnetz der Kraftfahrzeuge werden in den weitaus meisten Fällen Drehstromgeneratoren verwendet, die eine hohe Leistungsdichte aufweisen und somit thermisch stark beansprucht werden. Im Gehäuse der Drehstromgeneratoren ist in der Regel eine Gleichrichter-Anordnung integriert, so daß lediglich deren Gleichstromausgang die Anschlußklemmen des Generators bilden, an denen die Anschlußkabel einer Akkumulatorbatterie des Kraftfahrzeug-Bordnetzes angeschlossen werden. Bei einer Überbelastung oder einem Kurzschluß am Generator bzw. an der Gleichrichteranordnung, welche nicht selten in Kraftfahrzeugen dann auftreten, wenn an die entladende Batterie eine Batterieladeeinrichtung falsch gepolt angeschlossen wird, kann nicht nur der Generator bzw. die Gleichrichteranordnung zerstört werden sondern es können dadurch auch weitere Folgeschäden am Fahrzeug ausgelöst werden.

Zur Vermeidung dieser Gefahren ist es aus der DE 30 01 522 C2 bereits bekannt, in der Gleichrichteranordnung zwischen den Verbindungen der Plus- und Minus-Dioden der drei Gleichrichterbrücken Sicherungselemente anzuordnen. Die Sicherungen, die wegen Fertigungstoleranzen nur sehr ungenaue Ansprechwerte haben, werden dabei durch schleifenförmig aus Ausnehmungen einer Schaltungsplatine der Gleichrichteranordnung herausgebogene Leiterabschnitte gebildet, die im Falle einer elektrischen Überbelastung durchschmelzen und provisorisch durch Zusammendrehen der Enden wieder repariert werden können. Da die Anschlüsse der so gesicherten Leistungsdioden der Gleichrichteranordnung mit der Schaltungsplatine verlötet bzw. verschweißt sind, muß nach dem Ansprechen einer Sicherung die Gleichrichteranordnung später komplett ausgetauscht werden, was kosten- und zeitaufwendig ist. Außerdem besteht dort die Gefahr, dass die angesprochene Sicherung nur provisorisch repariert, das heißt überbrückt wird ohne die Gleichrichteranordnung bei nächster Gelegenheit zu erneuern. In diesem Fall erhöht sich dann noch die Zerstörungs- und Überhitzungsgefahr ganz erheblich. Wird das Ansprechen einer Sicherung in einem der drei Gleichrichterbrücken nicht bemerkt, werden die zwei intakten Gleichrichterbrücken um so mehr belastet, so dass schließlich auch diese ausfallen.

Aus der US 5,645,448 ist ein Batterieverbindungsmodul mit einer darin befestigten Hochstromsicherung bekannt. Diese dort offenbarte Sicherung dient dazu, den Teil des Generatorstroms, der an die Batterie geleitet wird zu begrenzen, und dadurch die Batterie zu schützen.

Mit der vorliegenden Erfindung wird angestrebt, eine Absicherung des Generators und der Gleichrichteranordnung gegenüber elektrischer Überlastung oder Kurzschluß möglichst einfach und zuverlässig zu bewerkstelligen.

### Vorteile der Erfindung

Der erfindungsgemäße Drehstromgenerator mit elektrischer Sicherung mit dem kennzeichnenden Merkmal des Hauptanspruchs 1 hat den Vorteil, daß beim Ansprechen der Sicherung der Generator mit der Gleichrichteranordnung vollständig abgeschaltet und damit das Ansprechen der Sicherung durch die Unterbrechung des Ladevorgangs deutlich erkennbar wird. Ein weiterer Vorteil besteht darin, daß beim Anschluß einer Batterieladeeinrichtung mit falscher Polung nicht mehr - wie bisher - alle drei Sicherungen in den drei Gleichrichterbrücken ansprechen müssen, sondern daß der Generator durch das Ansprechen der einen Sicherung komplett vom Bordnetz getrennt und damit die Gefahr von Überhitzungen verhindert wird.

Vorteilhafte Weiterbildungen und Ausgestaltungen ergeben sich aus den übrigen, in den Unteransprüchen genannten Merkmalen. So ergibt sich eine besonders zweckmäßige, fertigungstechnisch einfache Lösung, wenn das Sicherungselement zwischen einem den Pluspol bildenden Kühlkörper des Brückengleichrichters und einem Plus-Anschlußbolzen des Generators angeordnet ist. Dabei ist der Plus- Anschlußbolzen in einem Loch des Plus-Kühlkörper isoliert und lösbar befestigt.

Um beim Ansprechen der Sicherung diese möglichst leicht auswechseln zu können, ist es zweckmäßig, das Sicherungselement zusammen mit einem den Kopf des Plus-Anschlußbolzens einfassenden Isolierteil auf den Anschlußbolzen aufzuschieben und es auf der Stirnseite des Kopfes mit diesem elektrisch zu kontaktieren. Für eine möglichst zuverlässige Kontaktierung wird des weiteren vorgeschlagen, daß Plus-Anschlußbolzen, Isolierteil und Sicherungselement eine vorgefertigte Baueinheit bilden, indem das Sicherungselement mit seinem einen Anschluß auf der Stirnseite des Anschlußbolzenkopfes mit ihm galvanisch verbunden, vorzugsweise an ihm angeschweißt ist. In diesem Fall wird nach dem Ansprechen der Sicherung die komplette Baueinheit gewechselt.

Eine möglichst zuverlässige und einfache Verbindung des Sicherungselementes mit dem Plus-Kühlkörper wird dadurch erreicht, daß das Sicherungselement mit seinem anderen Anschluß ringförmig ausgebildet und auf einem den Anschlußbolzen einfassenden Kragen des Isolierteils aufgesetzt ist, wobei dieser Anschluß mit seiner Oberseite mit dem Plus-Kühlkörper beim Festspannen des Anschlußbolzens druckkontaktiert wird.

Eine sehr einfache Herstellung des Sicherungselementes läßt sich dadurch realisieren, daß dieses ein metallisches Stanzteil ist, das zwischen seinen beiden Anschlüssen einen seitlich am Kopf des Plus-Anschlußbolzens vom Isolierteil eingefaßten, im Querschnitt verengten Abschnitt aufweist, der bei Überlast wegschmilzt.

Um eine direkte Verbindung des Plus-Kühlkörpers mit dem Plus-Anschlußbolzen, und damit eine Überbrückung des Sicherungselementes zu verhindern, wird vorteilhafterweise oberhalb des Plus-Kühlkörpers eine Isolierscheibe auf den Plus-Anschlußbolzen aufgesetzt, um den Kühlkörper gegenüber einer am Anschlußbolzen in an sich bekannter Weise befestigten Schutzkappe zu isolieren.

Alternativ zu dem vorerwähnten Auswechseln der kompletten Baueinheit mit dem Sicherungselement kann die konstruktive Lösung zweckmäßigerweise auch so ausgestaltet werden, daß lediglich das Sicherungselement nach dem Ansprechen ausgewechselt werden muß. Für diesen Fall ist vorgesehen, daß der Plus-Anschlußbolzen ein seinen Kopfbereich einfassendes Isolierteil trägt und durch das Loch des Plus-Kühlkörpers isoliert hindurchragt, wobei das Sicherungselement auf den Plus-Anschlußbolzen derart aufgesetzt ist, daß es mit seinem unteren Anschluß auf den Plus-Kühlkörper aufliegt und mit seinem oberen Anschluß mittels einer Mutter mit dem Plus-Anschlußbolzen kontaktiert ist.

Auch dabei ist vorgesehen, daß das Sicherungselement aus einem ringförmigen, scheibenartigen Isoliertragkörper gebildet ist, der an seinen beiden Stirnflächen je einen ringscheibenförmigen Anschluß des Sicherungselementes trägt, wobei zwischen den beiden Anschlüssen ein seitlich am Isoliertragkörper vorbeigeführter Abschnitt mit verengtem Querschnitt bei Überlast wegschmilzt.

Um aus Gründen der Sicherheit den beim Ansprechen der Sicherung wegschmelzenden Abschnitt in einer vorgegebenen Position verdreh- und lagesicher auf dem Plus-Anschlußbolzen befestigen zu können, ist dieser Abschnitt um einen am Isoliertragkörper seitlich angeformten, plattenförmigen Vorsprung herumgeführt, welcher den Abschnitt beidseitig einfaßt. Außerdem wird dieser Vorsprung beidseitig von Nasen lagefixiert, welche am Plus-Kühlkörper angeformt sind.

Da dieses Sicherungselement auch als Ersatzteil in Verkehr gebracht werden kann, darf der Isoliertragkörper vor dem Einbau, nicht zwischen den beiden Anschlüssen des Sicherungselements herausfallen. Zu diesem Zweck ist vorgesehen, daß die beiden ringscheibenförmigen Anschlüsse den Isoliertragkörper an seinem äußeren Rand jeweils durch abgewinkelte Zungen einfassen.

### Zeichnung

Weitere Einzelheiten der Erfindung sind in den nachfolgend beschriebenen zwei Ausführungsbeispielen anhand der zugehörigen Zeichnung näher erläutert.

Es zeigen:
Figur 1 die Schaltung des Drehstromgenerators mit der Gleichrichteranordnung und der Sicherung,
Figur 2 als erstes Ausführungsbeispiel den Plus-Anschlußbolzen mit Sicherung als vormontierte Baueinheit und
Figur 3 eine Schnittdarstellung des am Plus-Kühlkörpers montierten Plus-Anschlußbolzens mit der Sicherung,
Figur 4 als zweites Ausführungsbeispiel einen Querschnitt der Gleichrichteranordnung im Bereich des Plus-Anschlußbolzens,
Figur 5 in raumbildlicher Darstellung das verdrehsicher auf den Plus-Anschlußbolzen aufgesetzte Sicherungselement und
Figur 6 im Teilschnitt eine Variante des zweiten Ausführungsbeispieles nach Figur 4.

### Beschreibung der Ausführungsbeispiele

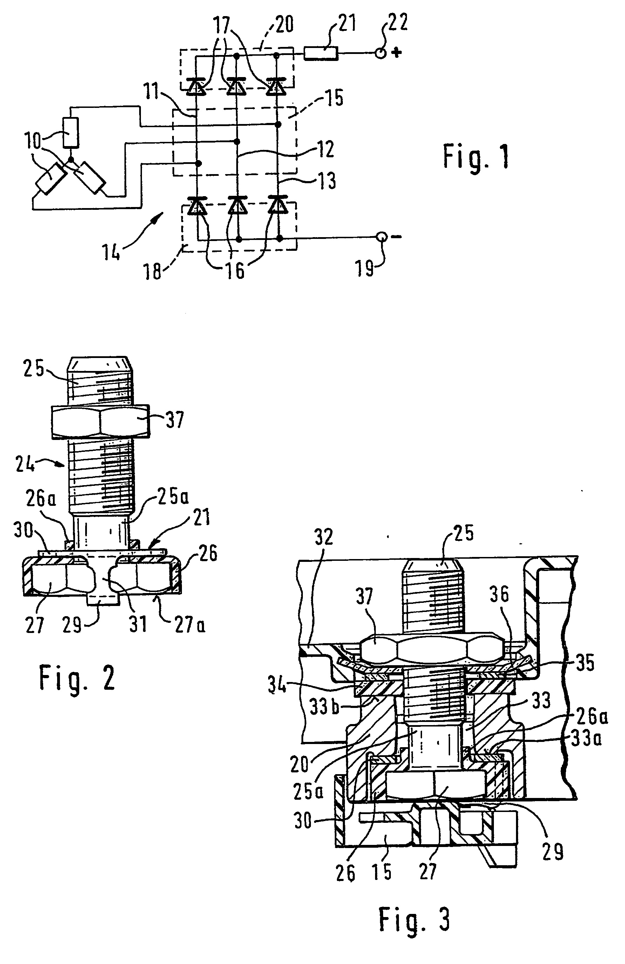

In Figur 1 sind die drei Phasen 10 eines Drehstromgenerators dargestellt, die mit ihrem einen Ende zu einer Sternschaltung zusammengefaßt und mit ihrem anderen Ende auf jeweils eine Diodenbrücke 11, 12 und 13 einer Gleichrichteranordnung 14 geschaltet sind. Zur Verschaltung der drei Phasen 10 mit den drei Diodenbrücken dient eine Leiterplatine 15, wobei jede der drei Diodenbrücken aus einer in Reihe geschalteten Minusdiode 16 und einer Plusdiode 17 besteht. Die Minusdioden 16 sind anodenseitig in einem Minus-Kühlkörper 18 eingepreßt und die Anodenanschlüsse der Minusdioden 16 sind somit durch den Minus-Kühlkörper 18 zu einem Minus-Anschluß 19 zusammengefaßt. Die Plusdioden 17 sind kathodenseitig in einem Plus-Kühlkörper 20 eingepreßt. In diesem Kühlkörper 20 sind die Kathodenanschlüsse der Plusdioden 17 zusammengefaßt und über ein Sicherungselement 21 mit einem Plus-Anschluß 22 der Gleichrichteranordnung 14 verbunden. Das Sicherungselement 21 ist so dimensioniert, daß es zum Schutz des Generators und der Gleichrichterdioden 16, 17 beim Überschreiten des zulässigen maximalen Gleichstromes durchschmilzt und den Stromkreis generatorseitig unterbricht. Dies kann beispielsweise durch falsche Polung beim Anschluß einer Batterieladeeinrichtung passieren.

Figur 2 zeigt eine vormontierte Baueinheit 24 aus einem Plus-Anschlußbolzen 25, einem geschnitten dargestellten Isolierteil 26 und dem Sicherungselement 21. Der Plus-Anschlußbolzen 25 bildet dabei eine Gleichstromanschlußklemme des Drehstromgenerators für das Plus-Anschlußkabel eines Akkumulators im Bordnetz eines Kraftfahrzeuges. Das Isolierteil 26 ist derart ausgebildet, daß es den Kopf 27 des Anschlußbolzens 25 einfaßt. Es ist des weiteren mit einem den Schaft 25a einfassenden Kragen 26a versehen. Das Sicherungselement 21 ist auf den Plus-Anschlußbolzen 25 zusammen mit dem Isolierteil 26 aufgeschoben und auf der Stirnseite 27a des Kopfes 27 mit diesem elektrisch kontaktiert, indem es mit seinem unteren Anschluß 29 auf der Stirnseite 27a des Kopfes 27 festgeschweißt ist. Mit seinem oberen Anschluß 30 ist es ringförmig ausgebildet und auf den Kragen 26a des Isolierteils 26 aufgesetzt. Das Sicherungselement 21 ist ein metallisches Stanzteil, das zwischen seinen beiden Anschlüssen 29, 30 einen seitlich am Kopf 27 des Plus-Anschlußbolzens 25 vom Isolierteil 26 eingefaßten, im Querschnitt verengten Abschnitt 31 aufweist, der bei Überlast wegschmilzt.

In Figur 3 ist der Plus-Anschlußbolzen 25 mit dem Sicherungselement 21 und einer Schutzkappe 32 am Plus-Kühlkörper 20 montiert im Querschnitt dargestellt. Der Schaft 25a des Anschlußbolzens 25 ragt dabei isoliert durch ein Loch 33 des Plus-Kühlkörpers 20 hindurch, wobei der Kragen 26a des Isolierteilers 26 in das Loch 33 hineinragt und wobei ferner der untere Rand 33a des Loches 33 auf der Oberseite des oberen Anschlusses 30 des Sicherungselementes 21 aufliegt. Der obere Rand 33b des Loches 33 trägt einen Isolierring 34, auf den sich über eine Federscheibe 35 die Schutzkappe 32 mit einer eingespritzten Klemmscheibe 36 abstützt. Durch eine auf den Plus-Anschlußbolzen 25 aufgesetzte Mutter 37 werden die Teile miteinander verspannt. Dabei wird der Plus-Kühlkörper 20 einerseits mit dem oberen Anschluß 30 des Sicherungselementes 21 druckkontaktiert und andererseits durch den Isolierring 34 gegenüber der Klemmscheibe 36 der Schutzkappe 32 und somit auch gegenüber der Mutter 37 und dem Anschlußbolzen 25 zur Vermeidung einer elektrischen Überbrückung des Sicherungselementes 21 isoliert.

Da das Sicherungselement 21 in einem den gesamten Generatorstrom führenden Leitungsstrang zwischen der Gleichrichteranordnung 14 und einer durch den Plus-Anschlußbolzen 25 gebildeten Gleichstromanschlußklemme des Generators angeordnet ist, kann das Sicherungselement 21 im Falle des Ansprechens bei Überlast leicht ausgewechselt werden. Da der Plus-Anschlußbolzen 25 im Plus-Kühlkörper 22 lösbar befestigt ist, läßt sich für diesen Fall die gesamte Baueinheit 24 gemäß Figur 2 auswechseln.

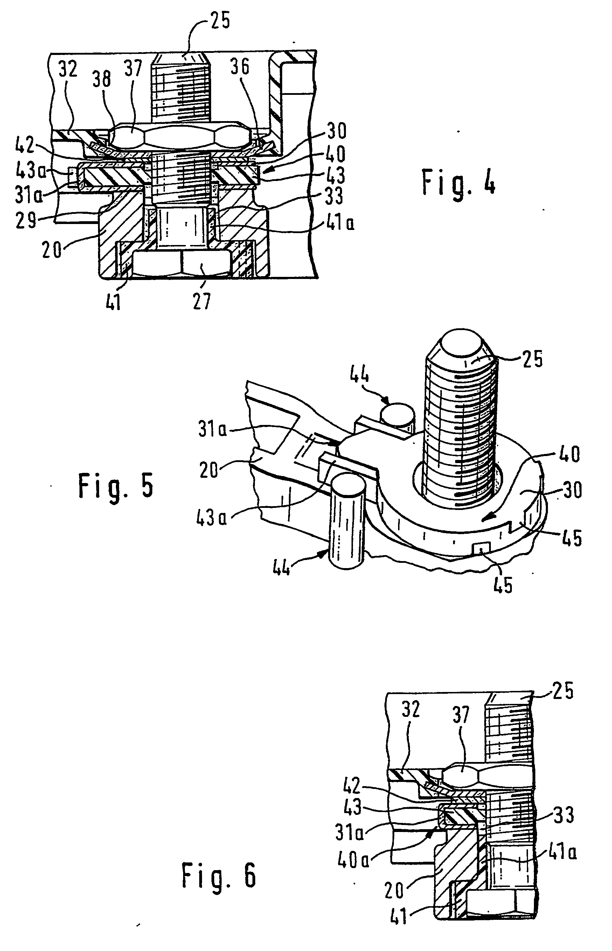

In einem zweiten Ausführungsbeispiel gemäß Figur 4 und 5 haben im Hinblick auf das erste Ausführungsbeispiel gleiche Teile die gleichen Bezugszahlen. Hierbei ist jedoch das Sicherungselement 40 derart ausgebildet, daß es nach dem Ansprechen für sich auswechselbar ist. Der Plus-Anschlußbolzen 25 ist hier ebenfalls in seinem Kopfbereich 27 von einem Isolierteil 41 eingefaßt, welches mit einem Kragen 41a in das Loch 33 des Plus-Kühlkörpers 20 hineinragt. Auf den durch das Loch 33 hindurchragende Ende des Plus-Anschlußbolzens 25 ist hier das Sicherungselement 40 derart aufgesetzt, daß es mit seinem unteren Anschluß 29 auf dem Plus-Kühlkörper 20 aufliegt. Mit seinem oberen Anschluß 30 ist es mittels der Mutter 37 mit dem Plus-Anschlußbolzen 25 kontaktiert, indem auf dem oberen Anschluß 30 zunächst eine Kontaktscheibe 42 aufliegt. Auf diese Kontaktscheibe 42 wird nun die Schutzkappe 32 mit der am Rand der Befestigungsöffnung 38 eingespritzten Klemmscheibe 36 auf den Plus-Anschlußbolzen 25 aufgesetzt. Schutzkappe 32, Kontaktscheibe 42, Sicherungselement 40, Kühlkörper 20 und Isolierteil 41 werden schließlich mit der auf das Gewinde des Anschlußbolzens 25 aufgesetzten Mutter 37 festgespannt.

Das Sicherungselement 40 besteht hier aus einem ringförmigen, scheibenartigen Isoliertragkörper 43 mit an seinen beiden Stirnflächen je einem ringscheibenförmigen Anschluß 29, 30 und einem zwischen den beiden Anschlüssen 29, 30 seitlich am Isoliertragkörper 43 vorbeigeführten Schmelzabschnitt 31a mit verengtem Querschnitt, der bei Überlast wegschmilzt. Aus der räumlichen Darstellung gemäß Figur 5 ist erkennbar, daß der Schmelzabschnitt 31a um einen am Isoliertragkörper 43 seitlich angeformten, plattenförmigen Vorsprung 43a herumgeführt ist, der den Schmelzabschnitt 31a beidseitig einfaßt. Zur Lagefixierung des Sicherungselementes 40 auf dem Plus-Anschlußbolzen 25 sind an dem Plus-Kühlkörper 20 zwei Nasen 44 angeformt, welche den Vorsprung 43a des Isoliertragkörpers 43 beidseitig und damit verdrehsicher einfassen. Außerdem werden die Teile des Sicherungselementes 40 dadurch zusammengehalten, daß die beiden ringscheibenförmigen Anschlüsse 29 und 30 den Isoliertragkörper 43 jeweils durch abgewinkelte Zungen 45 einfassen.

Die Lagefixierung des Sicherungselementes 40 hat den Vorteil, daß damit sichergestellt werden kann, daß der Schmelzabschnitt 31a nicht mit metallischen Bauteilen der Gleichrichteranordnung in Kontakt kommt und somit die Sicherungsfunktion überbrückt würde. Ferner wird dadurch verhindert, daß der Schmelzabschnitt 31a mit temperaturempfindlichen Materialien, beispielsweise mit der Schutzkappe 32 in Berührung kommt und schließlich wird durch die Lagefixierung ein Transport der Gleichrichteranordnung mit aufgesetztem Sicherungselement 40 ohne eine Veränderung seiner Lage ermöglicht. Der Abstand der beiden in beliebiger Querschnittsform auszugestaltenden Nasen 44 am Plus-Kühlkörper 20, zueinander ist so zu wählen, daß das Sicherungselement 40 mit seinem Vorsprung 43a uneingeschränkt in Fügerichtung zwischen den beiden Nasen 44 eingesetzt werden kann. Diese Lagefixierung ist ohne zusätzliche Bauteile möglich, da sie mit einfachen Werkzeugen aus einer bestehenden Form für den Plus-Kühlkörper herausgearbeitet werden können.

Ist die Gleichrichteranordnung sowie die Schutzkappe 32 so ausgebildet, daß der Schmelzabschnitt 31a des Sicherungelementes 40 ohnehin einen ausreichenden Sicherheitsabstand zu diesen Teilen hat, so kann auf eine Lagefixierung des Sicherungselementes auch verzichtet werden. Figur 6 zeigt hierzu eine Alternativlösung, bei der der Vorsprung 43a am Isoliertragkörper 43 weggelassen ist. Das Sicherungselement 40a ist hier ringförmig auf den Plus-Anschluß-Bolzen 25 aufgesetzt und zwischen Plus-Kühlkörper 20 und Kontaktscheibe 42 durch die Mutter 37 fest eingespannt. Sein Schmelzabschnitt 31a kann dabei an beliebiger Stelle am Umfang des Isoliertragkörpers 43 sitzen.

## Patentansprüche

1. Drehstromgenerator mit elektrischer Sicherung (21,40) und mit einer Gleichrichteranordnung (14) zur Versorgung eines Gleichstromnetzes, insbesondere in Kraftfahrzeugen, **dadurch gekennzeichnet, dass** die Sicherung in einem den gesamten Generatorstrom führenden Leitungsstrang zwischen der Gleichrichteranordnung (14) und einer Gleichstrom Anschlussklemme (22,25) des Generators in Form eines Sicherungselementes (21,40) angeordnet ist.

2. Drehstromgenerator nach Anspruch 1, **dadurch gekennzeichnet, dass** das Sicherungselement (21,40) zwischen einem den Pluspol bildenden Kühlkörper (20) der Gleichrichteranordnung (14) und einem die Generator Anschlussklemme (22) bildenden Plus-Anschlussbolzen (25) des Generators angeordnet ist, wobei der Plus-Anschlussbolzen (25), an dem Plus-Kühlkörper (20) vorzugsweise in einem Loch (33) des Plus-Kühlkörpers (20) isoliert und lösbar befestigt ist.

3. Drehstromgenerator nach Anspruch 2, **dadurch gekennzeichnet, dass** das Sicherungselement (21) zusammen mit einem den Kopf (27) des Plus-Anschlussbolzens (25) einfassenden Isolierteil (26) auf den Plus-Anschlussbolzen (25) aufgeschoben und auf der Stirnseite (27a) des Kopfes (27) mit diesem elektrisch kontaktiert ist.

4. Drehstromgenerator nach Anspruch 3, **dadurch gekennzeichnet, dass** Plus-Anschlussbolzen (25), Isolierteil (26) und Sicherungselement (21) eine vorgefertigte Baueinheit (24) bilden, indem das Sicherungselement (21) mit seinem einen Anschluss (29) auf der Stirnseite (27a) des Anschlussbolzenkopfes (27) mit ihm galvanisch verbunden, vorzugsweise an ihm angeschweißt ist.

5. Drehstromgenerator nach Anspruch 4, **dadurch gekennzeichnet, dass** das Sicherungselement (21) mit seinem anderen Anschluss (30) ringförmig ausgebildet und auf einem den Anschlussbolzen (25) einfassenden Kragen (26a) des lsolierteiles (26) aufgesetzt ist, so dass dieser Anschluss (30) auf seiner Oberseite mit dem Plus-Kühlkörper (20) druckkontaktiert ist.

6. Drehstromgenerator nach Anspruch 5, **dadurch gekennzeichnet, dass** das Sicherungselement (21) ein metallisches Stanzteil ist, das zwischen seinen beiden Anschlüssen (29, 30) einen seitlich am Kopf (27) des Plus Anschlussbolzens (25) vom Isolierteil (26) eingefassten, im Querschnitt verengten Abschnitt (31) aufweist, der bei Überlast wegschmilzt.

7. Drehstromgenerator nach einem der Ansprüche 3 bis 6, **dadurch gekennzeichnet, dass** auf dem Plus-Kühlkörper (25) ein Isolierring (34) auf dem Anschlussbolzen (25) aufgesetzt ist, um den Plus-Kühlkörper (20) gegenüber einer am Anschlussbolzen (25) in an sich bekannter Weise befestigten Schutzkappe (32) zu isolieren.

8. Drehstromgenerator nach Anspruch 2, **dadurch gekennzeichnet, dass** der Plus-Anschlussbolzen (25) an seinem Kopfbereich (27) von einem Isolierteil (41) eingefasst ist und durch das Loch (33) des Plus-Kühlkörpers isoliert hindurchragt, wobei das Sicherungselement (40) auf den Plus-Anschlussbolzen (25) derart aufgesetzt ist, dass es mit seinem unteren Anschluss (29) auf dem Plus-Kühlkörper (20) aufliegt und mit seinem oberen Anschluss (30) mittels einer Mutter (37) mit dem Plus-Anschlussbolzen (25) kontaktiert ist.

9. Drehstromgenerator nach Anspruch 8, **dadurch gekennzeichnet, dass** das Sicherungselement (40) aus einem ringförmigen, scheibenartigen Isoliertragkörper (43) gebildet ist, der an seinen beiden Stirnflächen je einen ringscheibenförmigen Anschluss (29, 30) trägt, wobei zwischen den beiden Anschlüssen (29, 30) ein Schmelzabschnitt (31, 31a) mit verengtem Querschnitt seitlich am Isoliertragkörper (43) vorbeigeführt ist.

10. Drehstromgenerator nach Anspruch 9, **dadurch gekennzeichnet, dass** der Schmelzabschnitt (31 a) um einen am Isoliertragkörper (43) seitlich angeformten, plattenförmigen Vorsprung (43a) herumgeführt ist, der den Schmelzabschnitt (31 a) beidseitig einfasst.

11. Drehstromgenerator nach Anspruch 10, **dadurch gekennzeichnet, dass** der Vorsprung (43a) des Isoliertragkörpers (43) beidseitig von am Plus-Kühlkörper (20) angeformten Nasen (44) eingefasst und lagefixiert ist.

12. Drehstromgenerator nach einem der Ansprüche 9 bis 11, **dadurch gekennzeichnet, dass** die beiden ringscheibenförmigen Anschlüsse (29, 30) des Sicherungselementes (40) den Isoliertragkörper (43) an seinem äußeren Rand jeweils durch abgewinkelte Zungen (44) einfassen.

13. Drehstromgenerator nach einem der Ansprüche 8 bis 12, **dadurch gekennzeichnet, dass** auf dem oberen Anschluss (29) des Sicherungselementes (40) eine auf den Plus-Anschlussbolzen (45) aufgeschobene Kontaktscheibe (42) aufliegt, die gemeinsam mit dem Sicherungselement (40) und dem Plus Kühlkörper (20) von der Mutter (37) am Plus-Anschlussbolzen (25) festgespannt ist.

14. Drehstromgenerator nach Anspruch 13, **dadurch gekennzeichnet, dass** zwischen der Kontaktscheibe (42) und der Mutter (37) eine in eine Befestigungsöffnung (38) einer Schutzkappe (32) eingespritzte Klemmscheibe (36) eingespannt ist.

## Claims

1. Three-phase generator having an electrical fuse (21, 40) and having a rectifier arrangement (14) for supplying a DC power supply system, in particular in motor vehicles, **characterized in that** the fuse is arranged, in the form of a fuse element (21, 40), in a line section, which carries all the generator current, between the rectifier arrangement (14) and a DC connection terminal (22, 25) of the generator.

2. Three-phase generator according to Claim 1, **characterized in that** the fuse element (21, 40) is arranged between a heat sink (20), which forms the positive pole, of the rectifier arrangement (14) and a positive connection bolt (25), which forms the generator connection terminal (22), of the generator, with the positive connection bolt (25) being fixed to the positive heat sink (20), preferably in a hole (33) in the positive heat sink (20), in an insulated and releasable manner.

3. Three-phase generator according to Claim 2, **characterized in that** the fuse element (21), together with an insulating part (26) which surrounds the head (27) of the positive connection bolt (25), is pushed onto the positive connection bolt (25) and electrical contact is made with the head (27) on the end face (27a) of the said head.

4. Three-phase generator according to Claim 3, **characterized in that** the positive connection bolt (25), the insulating part (26) and the fuse element (21) form a prefabricated physical unit (24) by a connection (29) of the fuse element (21) being electrically conductively connected, preferably welded, to the connection bolt head (27) on the end face (27a) of the said connection bolt head.

5. Three-phase generator according to Claim 4, **characterized in that** the other connection (30) of the fuse element (21) is annular and is placed on a collar (26a), which surrounds the connection bolt (25), of the insulating part (26), so that the upper face of this connection (30) is in pressure-contact with the positive heat sink (20).

6. Three-phase generator according to Claim 5, **characterized in that** the fuse element (21) is a stamped metal part which, between its two connections (29, 30), has a section (31) which is surrounded at the sides of the head (27) of the positive connection bolt (25) by the insulating part (26), has a constricted cross section and melts through in the event of an overload.

7. Three-phase generator according to one of Claims 3 to 6, **characterized in that** an insulating ring (34) is placed on the connection bolt (25) above the positive heat sink (20), in order to insulate the positive heat sink (20) from a protective cap (32) which is fixed to the connection bolt (25) in a manner which is known per se.

8. Three-phase generator according to Claim 2, **characterized in that** the head region (27) of the positive connection bolt (25) is surrounded by an insulating part (41) and the said positive connection bolt projects through the hole (33) in the positive heat sink in an insulated manner, with the fuse element (40) being placed on the positive connection bolt (25) in such a way that its lower connection (29) rests on the positive heat sink (20) and the positive connection bolt (25) makes contact with its upper connection (30) by means of a nut (37).

9. Three-phase generator according to Claim 8, **characterized in that** the fuse element (40) is formed from an annular, disc-like insulating support body (43) which has an annular-disc-like connection (29, 30) at each of its two end faces, with a fusible section (31, 31a) with a constricted cross section being routed past the sides of the insulating support body (43) between the two connections (29, 30).

10. Three-phase generator according to Claim 9, **characterized in that** the fusible section (31a) is routed around a plate-like projection (43a) which is integrally formed on the side of the insulating support body (43) and surrounds the fusible section (31a) on both sides.

11. Three-phase generator according to Claim 10, **characterized in that** the projection (43a) of the insulating support body (43) is surrounded and fixed in position on both sides by lugs (44) which are integrally formed on the positive heat sink (20).

12. Three-phase generator according to one of Claims 9 to 11, **characterized in that** the two annular-disc-like connections (29, 30) of the fuse element (40) surround the outer edge of the insulating support body (43) by means of angled tongues (45) in each case.

13. Three-phase generator according to one of Claims 8 to 12, **characterized in that** a contact disc (42) which is pushed onto the positive connection bolt (25) and, together with the fuse element (40) and the positive heat sink (20), is firmly clamped on the positive connection bolt (25) by the nut (37), rests on the upper connection (29) of the fuse element (40).

14. Three-phase generator according to Claim 13, **characterized in that** a clamping disc (36), which is injection-moulded into a fixing opening (38) in a protective cap (32), is clamped-in between the contact disc (42) and the nut (37).

## Revendications

1. Alternateur à courant triphasé comportant une protection électrique (21, 40) et un montage redresseur (14) pour alimenter un réseau de courant continu, notamment dans des véhicules automobiles,
**caractérisé en ce que**
le dispositif de protection est installé dans une ligne traversée passe l'ensemble du courant de l'alternateur, entre le montage redresseur (14) et une borne de branchement de courant continu (22, 25) de l'alternateur sous la forme d'un élément de protection (21, 40).

2. Alternateur à courant triphasé selon la revendication 1,
**caractérisé en ce que**
l'élément de protection (21, 40) est installé entre un radiateur (20) formant le pôle positif du montage redresseur (14) et un goujon de branchement de pôle positif (25) de l'alternateur constituant sa borne de branchement (22),
le goujon de branchement positif (25) est fixé de façon amovible sur le radiateur positif (20), de préférence dans un orifice (33) du radiateur de pôle positif (20), en étant isolé.

3. Alternateur à courant triphasé selon la revendication 2,
**caractérisé en ce que**
l'élément de protection (21) est engagé avec une pièce isolante (26) enserrant la tête (27) du goujon de branchement positif (25) sur ce goujon (25) et est en contact électrique avec la face frontale (27a) de la tête (27).

4. Alternateur à courant triphasé selon la revendication 3,
**caractérisé en ce que**
le goujon de branchement positif (25), la partie isolante (26) et l'élément de protection (21) constituent un ensemble préfabriqué (24), **en ce que** l'élément de protection (21) est relié galvaniquement de préférence soudé par son contact (29) sur la face frontale (27a) de la tête (27) du goujon de branchement.

5. Alternateur à courant triphasé selon la revendication 4,
**caractérisé en ce que**
l'élément de protection (21) et son autre contact (30) sont de forme annulaire et sont rapportés sur la collerette (26a) de la pièce isolante (26) enserrant le goujon de branchement (25) de façon que le contact (30) soit mis en contact par pression de sa face supérieure avec le radiateur positif (20).

6. Alternateur à courant triphasé selon la revendication 5,
**caractérisé en ce que**
l'élément de protection (21) est une pièce métallique emboutie ayant un segment (31) de section réduite entre ses deux contacts (29, 30), enserré latéralement par la tête (27) du goujon de branchement positif (25) avec la pièce isolante (26), ce segment fondant en cas de surcharge.

7. Alternateur à courant triphasé selon l'une des revendications 3 à 6,
**caractérisé en ce que**
le radiateur positif (20) comporte une bague isolante (34) rapportée sur le goujon de branchement (25) pour isoler le radiateur positif (20) par rapport à un capuchon protecteur (32) fixé de façon connue en soi sur le goujon de branchement (25).

8. Alternateur à courant triphasé selon la revendication 2,
**caractérisé en ce que**
la région de tête (27) du goujon de branchement positif (25) est enserrée par une pièce isolante (41) et traverse de façon isolée l'orifice (33) du radiateur positif,
l'élément de protection (40) étant rapporté sur le goujon de branchement positif (25) de façon que son contact inférieur (29) s'appuie sur le radiateur positif (20) et son contact supérieur (30) touche le goujon de branchement positif (25) par un écrou (37).

9. Alternateur à courant triphasé selon la revendication 8,
**caractérisé en ce que**
l'élément de protection (40) est constitué par un corps isolant de support (43) annulaire, en forme de rondelle, portant sur ses deux faces frontales, un branchement (29, 30) en forme de rondelle et entre les deux contacts (29, 30) il y a un segment fusible (31, 31a) de section réduite, passant latéralement à côté du corps de support isolant (43).

10. Alternateur à courant triphasé selon la revendication 9,
**caractérisé en ce que**
le segment fusible (31a) entoure une partie en saillie (43a) en forme de plaque, réalisée latéralement sur le support d'isolant (43), et qui enserre des deux côtés le segment fusible (31a).

11. Alternateur à courant triphasé selon la revendication 10,
**caractérisé en ce que**
la partie en saillie (43a) du support isolant (43) est enserrée et bloquée en position des deux côtés par des becs (44) formés sur le radiateur positif (20).

12. Alternateur à courant triphasé selon l'une des revendications 9 à 11,
**caractérisé en ce que**
les deux contacts (29, 30) en forme de rondelles de l'élément de protection (40) enserrent le support isolant (43) par son bord extérieur, chaque fois par des languettes coudées (44).

13. Alternateur à courant triphasé selon l'une des revendications 8 à 12,
**caractérisé par**
une rondelles de contact (42) engagée sur le goujon de branchement positif (45), sur le contact supérieur (29) de l'élément de protection (40), et qui est serrée et bloquée en commun avec l'élément de protection (40) et le radiateur positif (20) par l'écrou (37) sur le goujon de branchement positif (25).

14. Alternateur à courant triphasé selon la revendication 13,
**caractérisé par**
une rondelle de serrage (36) intégrée par injection dans un orifice de fixation (38) d'un capuchon (32), en étant serrée entre la rondelle de contact (42) et l'écrou (37).
